# EUROPEAN PATENT SPECIFICATION

(11) **EP 1 432 941 B1**
(45) Date of publication and mention of the grant of the patent: **13.12.2006**
(21) Application number: 02766364.0
(22) Date of filing: 26.09.2002
(51) Int. Cl.: F16L 17/04

(54) **FERROUS PIPE COUPLINGS AND PRELUBRICATED COUPLING GASKETS**
ROHRVERBINDUNGEN AUS EISEN UND VORGESCHMIERTE DICHTUNG FÜR ROHRVERBINDUNGEN
COUPLAGES DE TUYAUX FERREUX ET LEURS GARNITURES PRELUBRIFIEES

(30) Priority: 28.09.2001 US 965983
(43) Date of publication of application: 30.06.2004
(73) Proprietor: CENTRAL SPRINKLER CORPORATION, Landsdale, PA 19446 (US)
(72) Inventor: RADZIK, Joseph, G., Easton, PA 18040-7500 (US)
(74) Representative: Jones, David Colin
(86) International application number: PCT/US2002/030513
(87) International publication number: WO 2003/029712

(56) References cited:
- WO-A-01/21993
- GB-A- 2 150 162
- US-A- 4 230 157
- US-A- 4 808 323
- US-A- 5 070 597

## Description

### BACKGROUND OF THE INVENTION

Elastomeric pipe coupling gaskets that are commonly used with ferrous pipe couplings are lubricated so that they are not damaged during installation. Various types of oils and/or greases are used depending upon the gasket, pipe, fitting and coupling materials involved. However, such lubrication is usually supplied in a separate container and then manually applied to the gasket just prior to installation. This keeps the lubricant fresh and prevents the collection of dirt and debris on the lubricant coating prior to use of the gasket. However, it makes for a time-consuming and messy installation process.
WO 01/21933A discloses an elastomeric gasket for a pipe coupling having a dry lubricating film of an aqueous solution of a lubricant and a film-forming polymer adhered thereto.
US-A-4230157 discloses a pipe having a sealing member in an inner groove at one pipe end. The sealing member provides a very effective seal relative to a spigot end of another pipe inserted in the pipe in question. The free ends of lip portions of a sealing ring (the cross section of which is of V-shape when undeformed) are provided with beads so that behind a stiffening ring surrounding said sealing ring there is more volume of lip material than there is room for in the space confined by the adjacent part of the bottom of the groove, the exterior of said spigot end, the rear-most sidewall of the groove and the stiffening ring. The pipe is preferably a plastic pipe.
US-A-5070597 discloses a double-walled article in the form of a tube having a small volume filling of a friction-reducing liquid or solid between its two walls. The article is able to revolve over a substrate by relative sliding motion between its two walls, to provide environmental or electrical protection.

### BRIEF SUMMARY OF THE INVENTION

In accordance with the present invention, there is provided a lubricated ferrous pipe coupling gasket comprising:
a generally tubular, one-piece, elastomeric member with first and second axial open ends,
the member is formed by a circumferential wall and at least a pair of circumferential flanges, each flange extending at least generally radially inwardly at a separate one of the first and second axial open ends of the member, the circumferential wall and the pair of circumferential flanges forming at least one circumferential channel on an inner circumferential side of the member;
characterised in that a dry lubricant in the form of a powder coating is provided on at least the inner circumferential side of the pair of flanges of the member.

The invention also provides a ferrous pipe coupling comprising:
a ferrous collar having an outer, axially extending, axially split circumferential wall with at least one pair of adjoining circumferential ends at the split;
at least one fastener releasably securing together the at least one pair of adjoining, circumferential ends of the collar;
a gasket in accordance with the invention positioned in the collar with the inner circumferential side exposed in the collar, and the flange being arranged to form a seal with a pipe.

The invention further provides a ferrous piping system comprising:
a plurality of ferrous piping components;
at least one ferrous pipe coupling in accordance with the invention mechanically and fluidly joining together ends of a pair of the piping components at a joint; and at least one fastener releasably securing together a pair of adjoining, circumferential ends of the collar so as to compress the gasket and the collar on the ends of the pair of piping components.

### BRIEF DESCRIPTION OF THE SEVERAL VIEWS OF THE DRAWINGS

The foregoing summary, as well as the following detailed description of preferred embodiments of the invention, will be better understood when read in conjunction with the appended drawings. For the purpose of illustrating the invention, there is shown in the drawings embodiments which are presently preferred. It should be understood, however, that the invention is not limited to the precise arrangements and instrumentalities shown.

In the drawings:

Fig. 1 is a diagrammatic sketch of a portion of a ferrous piping system utilizing the present invention and configured to supply water for fire sprinkler protection;

Fig. 2 is a detailed exploded view of one of the joints at one of the ends of the Tee fitting of Fig. 1;

Fig. 3 is a localized cross-section through a flexible joint formed by a split ring ferrous coupling with prelubricated elastomeric gasket;

Fig. 4 is a localized cross-section through a rigid joint formed by a split ring ferrous coupling with prelubricated elastomeric gasket;

Fig. 5 is a localized cross-section through a rigid joint formed by a split ring ferrous coupling and a second type of prelubricated elastomeric gasket; and

Fig. 6 depicts a hinged type of split ring, ferrous pipe coupling; and

Fig. 7 depicts a second type of hinged, split ring, ferrous pipe coupling.

### DESCRIPTION OF THE INVENTION

Like reference numerals are used to identify the same elements to various drawings.

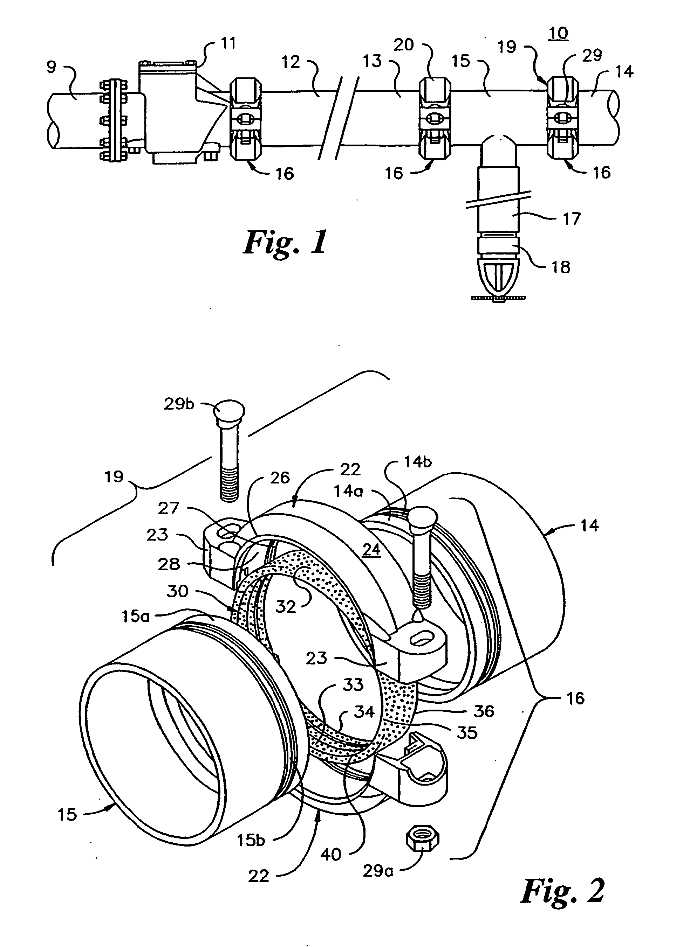

Fig. 1 depicts diagrammatically a portion of a ferrous piping system indicated generally at 10. The system includes a plurality of piping components 11-17, which, for the most part, are lengths of pipe, couplings and fittings which have fluid passages therethrough. System 10 is configured in particular for water distribution as part of a fire sprinkler system. A one-way valve 11 is coupled with a potable water supply represented by a potable water supply pipe 9 and is arranged to supply water in only one direction from the supply pipe 9 to the piping system 10. The piping system 10 utilizing the present invention is a ferrous system utilizing lengths of iron or steel pipe and appropriate iron or steel fittings, couplings and other components for use with those pipes.

The portion of the piping system 10 depicted includes different piping components typically found in a fire sprinkler system. Elements 12 through 14 are lengths of straight pipe. Element 15 is a Tee fitting. Elements 16 are preferably identical, ferrous, split ring pipe couplings. Element 17 is a drop, a length of pipe of reduced diameter in comparison to pipe lengths 12 through 14. Finally, element 18 is an automatic fire sprinkler of conventional construction. The term "piping components" includes pipe lengths, valves, fittings and like fluid passage elements having one or more open tubular ends, which can be joined together by appropriate couplings or the like, forming joints between adjoining components, as well as plugs used in such systems.

Fig. 2 is an exploded view of the joint 19 made between a first piping component, pipe length 14, and a second piping component, Tee fitting 15, by one of the ferrous pipe couplings 16. Ferrous pipe coupling 16 includes a split ring ferrous collar (indicated generally at 20 in Fig. 1) preferably formed by a plurality of identical ring segments 22, which are releasably secured together end to end at pairs of adjoining circumferential ends by suitable and conventional means, in this case each fastener 29 (Fig. 1) formed by nut 29a and bolt 29b combination in which the bolt 29b passed through a bolt pad 23 at each circumferential end of each ring segment 22. The two separate segments define two axial splits in the collar. At least one split is required to mount the collar. The ferrous pipe coupling 16 further includes a gasket 30 in the form of a generally tubular, one-piece, elastomeric member.

The coupling 16 depicted in Fig. 2 mechanically and fluidly joins together ends 14a and 15a, respectively, of pipe length 14 and Tee fitting 15 at joint 19. Preferably, components 11-16 are grooved piping components made of ductile iron. That is, at least one and generally at least two tubular ends of each valve 11, length of pipe 12-14 and fitting 15 is provided with a circumferential groove, which is interferingly engaged by the collar 20 of the coupling 16 to retain the components 14 and 15 together. These grooves are indicated at 14b and 15b, respectively, in Fig. 2.

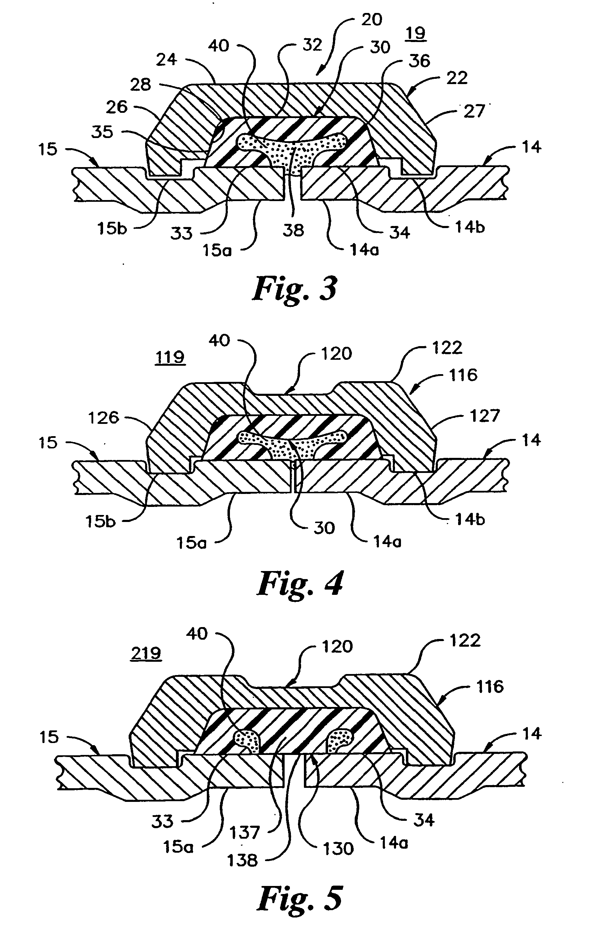

Depending upon the nature of the coupling 16, the joint 19 can be rigid or flexible.
A typical flexible joint is depicted in cross-section in Fig. 3 showing a portion of one of the ring segments 22 as well as a portion of the gasket 30. Each split ring ferrous collar 20 has an outer, axially extending, split circumferential wall 24 and a pair of axially flanking, generally radially inwardly and preferably axially outwardly extending circumferential flanges 26 and 27. Each flange 26 and 27 is located generally at a separate axial end of the circumferential wall 24. The pair of circumferential flanges 26 and 27 and the circumferential wall 24 form a generally circumferential channel 28 on an inner circumferential side of the collar 20. Gasket 30 is positioned in the channel 28. The ring segments 22 of the collar 20 are sized in such a way that when the ends (e.g., the bolt pads 23) are brought together with the fasteners 29, they contact and bottom against one another before the circumferential flanges 26, 27 of the collar 20 bottom against the innermost circumferential surface of the groove 14b, 15b. The flexible coupling 16 allows for some annular deflection between the piping components, which permit some minor bending between the joined piping components. They further permit some axial movement for thermal expansion and contraction.

Gasket 30 is preferably a generally tubular, one-piece, elastomeric member including a circumferential wall 32 and a pair of circumferential flanges 33 and 34 located generally at first and second open axial ends 35, 36, respectively, of the circumferential wall 32 and of the gasket 30. Flanges 33 and 34 each extend at least generally radially inwardly. The circumferential wall 32 and the pair of flanges 33 and 34 also form a circumferential channel 38 on an inner circumferential side of the gasket 30. The gasket 30 may be formed from any of a variety of suitable elastomeric, preferably polymeric materials. Suggestedly, the polymer is a nitrile or an ethylene, propylene, diene monomer ("EPDM"). One-piece gasket 30 can be molded in a seamless, one-piece, continuous ring or extruded and spliced by bonding into a seamed, one-piece, continuous ring, for example, with the use of a suitable adhesive or solvent.

In use, the gasket 30 is stretched over the end 14a or 15a of one of the piping components 14, 15 and then over the other end as the ends 14a, 15a of the two components are brought together. The split ring ferrous collar 20 is then extended over and around the gasket 30 and the ends 14a, 15a of the components 14, 15 being joined. The stretched gasket 30 forms seals with both ends 14a, 15a. In order to prevent subsequent leakage, it is important that the circumferential inner side (i.e., the inner faces of the flange portions 33, 34) of the gasket 30 not be scraped or cut when being mounted on the ends 14a, 15a of the piping components. Otherwise, the gasket 30 may leak through the damaged area. For that reason, such gaskets are typically coated with an oily liquid or greasy solid material so as to be more easily and safely slipped over the adjoining ends of the piping components. However, according to the present invention, instead of using a wet liquid or greasy solid, the gasket 30 or at least the inner circumferential side of the gasket 30, which is exposed to and which directly contacts the ends 14a, 15a of the joined piping components 14, 15, is covered with a coating of dry cornstarch powder. The surface coating of cornstarch powder is indicated by shading at 40 in Fig. 2 and in the subsequent Figs. 4 through 6. Preferably, the cornstarch is simply a conventional commercial grade powder. It can be applied to the gasket 30 simply by tumbling the gasket 30 with cornstarch powder in a suitable agitator. A drum, rotating at a speed suitable to tumble the gasket and to tumble the powder on(to) the gasket may be used. For example, a 91,4 cm (three foot) diameter drum positioned essentially on its side may be rotated between about 20 and 40 rpm for a few minutes to cover a gasket inside and out with an amount of cornstarch effective to lubricate its mounting over piping component ends. The dry cornstarch powder tends to uniformly cover all surfaces of the dry elastomeric member 30, possibly by electrostatic attraction, at least for the nitrile and EPDM elastomeric identified above. The cornstarch powder can be applied at any time before installation but is preferably applied during manufacture before assembly of the coupling. The coupling can then be shipped to distributors and end users in a prelubricated form ready for installation. It has been found that the cornstarch powder cannot be significantly removed by simple rubbing or handling. It is not sticky or tacky and does not attract dust, dirt or other contaminants before use.

Fig. 4 depicts the joint 119 formed by a rigid coupling 116 with a collar 120 in which the adjoining ends of the ring segments 122 can be compressed together sufficiently by the fastener(s) 29 (See Figs. 1-2) for the inner circumferential surface of each circumferential flange portion 126, 127 of the collar 120 to bottom against the innermost surface of the circumferential groove 14b, 15b on the joined piping components 14, 15. Rigid couplings are used where pipe movement is undesirable such as in relatively long runs of pipe to minimize the requirements for external supports and in risers.

Fig. 5 shows a similar joint 219 formed with rigid coupling 116 which utilizes a different type of gasket 130 having a central flange 137 with sealing surface 138 which spans both ends 14a, 15a.

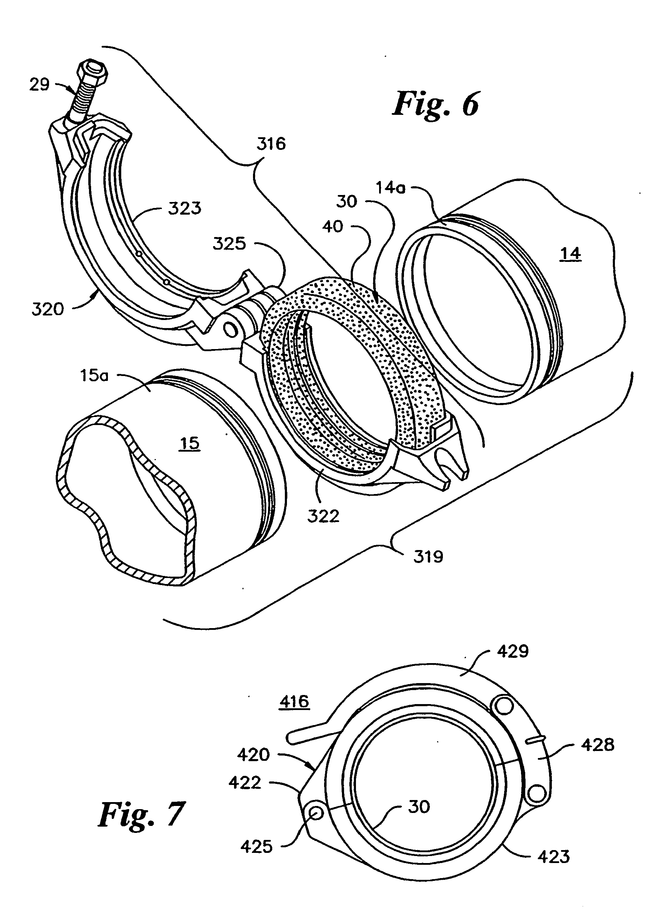

Fig. 6 depicts a joint 319 between ends of piping components 14, 15, which is formed by a first type of gasketed hinged coupling indicated generally at 316. Coupling 316 includes a collar 320 formed by a pair of split ring segments 322, 323, which are coupled together at one of their pair of adjoining ends by a hinge 325. Again, a releasable fastener 29 is used to releasably secure together the remaining adjoining ends of the segments 322, 323, around a powdered cornstarch coated gasket 30 and ends 14a, 15a of piping components 14 and 15.

Fig. 7 depicts a second type of gasketed hinged coupling indicated generally at 416. Coupling 416 includes a collar 420 formed by segments 422, 423 hinged together at one end 425 in which the remaining pair of adjoining ends are brought together and releasably secured by a fastener in the form of a hinged latch member 428 and an over center hinged locking pivot lever 429, which is itself hinged to the latch member 428. An inner channel receives a gasket 30 with powdered cornstarch coating.

While dry, powdered cornstarch is preferred, other dry, powdered organic starches such as rice starch and potato starch might alternatively be used. In addition, a powder predominantly or essentially composed of talc, i.e. magnesium silicate hydroxide (Mg₃Si₄O₁₀(OH)₂), which is the primary ingredient of conventional talcum powder, or that powder itself might be used as a dry lubricant. Corn, rice and potato starches, being natural ingredients derived from crops, can, with other similar naturally derived starches, be referred to generically as organic starch powder. The lubricant can include as a primary component, one of the aforementioned individual materials in combination with lesser amount(s) of the other(s).

While at least two forms of split ring, ferrous collar couplings have been disclosed, those of ordinary skill in the art will appreciate powered cornstarch can be used on other ferrous collar coupling gaskets for use on grooved ferrous piping components as well as on other iron and steel piping components. While the split ring, ferrous collars 20, 120 and 220 and 320 described each have two ring segments, it will be appreciated that three or more segments can be employed and may be necessary in larger sizes. The segments may be identical or simply matingly symmetric for simple assembly and mounting. Similarly, in some cases, a one-piece collar of spring steel or other metal having only one pair of adjoining ends held together with a threaded fastener or a latching member might be used with a prelubricated gasket. It further will be appreciated that the present invention can be used with tubular gaskets of other configurations such as gaskets without an inner circumferential channel or distinct flanges. It will further be appreciated that while the intended use of a cornstarch lubricated polymer gasket is in fire protection systems, including automatic and deluge sprinkler piping systems, such lubricated gaskets can be installed in piping systems for other uses. Suggestedly, they are used in piping systems that are isolated from potable water supplies by suitable means such as one-way valves or in water supply systems not coupled with potable water supplies. These include various irrigation, cooling, heating and drainage systems, as well as certain other agricultural or commercial hydraulic and/or pneumatic systems.

It will be appreciated by those skilled in the art that changes could be made to the embodiments described above. It is understood, therefore, that this invention is not limited to the particular embodiments disclosed, but it is intended to cover modulations within the scope of the present invention as defined by the appended claims.

## Claims

1. A lubricated ferrous pipe coupling gasket (30,130) comprising:
a generally tubular, one-piece, elastomeric member with first and second axial open ends (35, 36), wherein
the member is formed by a circumferential wall (32) and at least a pair of circumferential flanges (33, 34), each flange extending at least generally radially inwardly at a separate one of the first and second axial open ends (35, 36) of the member, the circumferential wall (32) and the pair of circumferential flanges (33, 34) forming at least one circumferential channel (38, 138) on an inner circumferential side of the member;
**characterised in that** a dry lubricant (40) in the form of a powder coating is provided on at least the inner circumferential side of the pair of flanges (33,34) of the member.

2. The gasket of claim 1 wherein the dry lubricant comprises an organic starch powder.

3. The gasket of claim 1 wherein the dry lubricant consists essentially of organic starch powder.

4. The gasket of claim 1 wherein the dry lubricant is selected from the group consisting of cornstarch, rice starch, potato starch, talc and magnesium silicate hydroxide.

5. The gasket of any one of claims 1 to 4, wherein the dry lubricant coats all circumferential surfaces of the gasket.

6. A ferrous pipe coupling (16, 116, 316, 416) comprising:
a ferrous collar (20, 120, 320, 420) having an outer, axially extending, axially split circumferential wall (24) with at least one pair of adjoining circumferential ends (23) at the split;
at least one fastener (29, 428, 429) releasably securing together the at least one pair of adjoining, circumferential ends of the collar;
a gasket (30, 130) in accordance with any one of claims 1 to 5 positioned in the collar with the inner circumferential side exposed in the collar, and the flanges (33,34) being arranged to form a seal with a pipe.

7. The ferrous pipe coupling of claim 6 wherein the ferrous collar (20) includes a pair of at least generally radially inwardly extending circumferential flanges (26, 27, 126, 127), each flange being located at a separate axial end of the circumferential wall (24) the pair of flanges and the circumferential wall (24) forming a circumferential channel (28) on an inner circumferential side of the collar (20) and wherein the gasket (30) is positioned in the channel (28).

8. A ferrous piping system (10) comprising:
a plurality of ferrous piping components (11 - 17);
at least one ferrous pipe coupling (16, 116, 316, 416) in accordance with claim 6 or 7 mechanically and fluidly joining together ends of a pair of the piping components at a joint (19, 119, 219, 319); and
at least one fastener (29, 428, 429) releasably securing together a pair of adjoining, circumferential ends of the collar so as to compress the gasket and the collar on the ends of the pair of piping components.

9. The ferrous piping system of claim 8 comprising:
a one-way valve (11) coupled with the plurality of piping components to a potable water supply (9), the valve being arranged to supply water from the potable water supply to the plurality of piping components.

10. The ferrous piping system of claim 9, wherein one of the plurality of piping components is a fitting (15), and comprising a fire sprinkler (18) coupled with the fitting to be supplied with water by the potable water supply through the piping system.

## Patentansprüche

1. Geschmierte Dichtung (30, 130) für Rohrkupplungen aus Eisen, die umfasst:
ein im Allgemeinen röhrenförmiges, aus einem Stück bestehendes Elastomerelement mit einem ersten und einem zweiten axialen offenen Ende (35, 36), wobei
das Element durch eine Umfangswand (32) und wenigstens ein Paar Umfangsflansche (33, 34) gebildet wird, sich jeder Flansch an einem separaten von dem ersten und dem zweiten axialen offenen Ende (35, 36) des Elementes wenigstens im Allgemeinen radial nach innen erstreckt und die Umfangswand (32) sowie das Paar Umfangsflansche (33, 34) wenigstens einen Umfangskanal (38, 138) an einer Innenumfangsseite des Elementes bilden;
**dadurch gekennzeichnet, dass** ein trockenes Schmiermittel (40) in Form einer Pulverbeschichtung wenigstens an der Innenumfangsseite des Paars der Flansche (33, 34) des Elementes vorhanden ist.

2. Dichtung nach Anspruch 1, wobei das trockene Schmiermittel ein organisches Stärkepulver umfasst.

3. Dichtung nach Anspruch 1, wobei das trockene Schmiermittel im Wesentlichen aus organischem Stärkepulver besteht.

4. Dichtung nach Anspruch 1, wobei das trockene Schmiermittel aus der Gruppe ausgewählt wird, die aus Maisstärke, Reisstärke, Kartoffelstärke, Talkum und Magnesiumsilikathydroxid besteht.

5. Dichtung nach einem der Ansprüche 1 bis 4, wobei das trockene Schmiermittel alle Umfangsflächen der Dichtung überzieht.

6. Rohrkupplung (16, 116, 316, 416) aus Eisen, die umfasst:
einen Ring (20, 120, 320, 420) aus Eisen, der eine äußere, axial verlaufende, axial geteilte Umfangswand (24) mit wenigstens einem Paar aneinandergrenzender Umfangsenden (23) an der Teilung hat;
wenigstens ein Befestigungselement (29, 428, 429), das das wenigstens eine Paar aneinandergrenzender Umfangsenden des Rings lösbar aneinander befestigt;
eine Dichtung (30, 130) nach einem der Ansprüche 1 bis 5, die in dem Ring so angeordnet ist, dass die Innenumfangsseite in dem Ring freiliegt, und wobei die Flansche (33, 34) so angeordnet sind, dass sie eine Dichtung mit einem Rohr bilden.

7. Rohrkupplung aus Eisen nach Anspruch 6, wobei der Ring (20) aus Eisen ein Paar wenigstens allgemein sich radial nach innen erstreckender Umfangsflansche (26, 27, 126, 127) enthält, jeder Flansch an einem separaten axialen Ende der Umfangswand (24) angeordnet ist, das Paar Flansche und die Umfangswand (24) einen Umfangskanal (28) an einer Innenumfangsseite des Rings (20) bilden und die Dichtung (30) in dem Kanal (28) angeordnet ist.

8. Rohrleitungssystem (10) aus Eisen, das umfasst:
eine Vielzahl von Rohrleitungskomponenten (11-17) aus Eisen;
wenigstens eine Rohrkupplung (16, 116, 316, 416) aus Eisen nach Anspruch 6 oder 7, die Enden eines Paars der Rohrleitungskomponenten an einer Verbindung (19, 119, 219, 319) mechanisch und zur Fluidleitung miteinander verbindet; und
wenigstens ein Befestigungselement (29, 428, 429), das ein Paar aneinandergrenzender Umfangsenden des Rings lösbar so aneinander befestigt, dass die Dichtung und der Ring an den Enden des Paars Rohrleitungskomponenten zusammengedrückt werden.

9. Rohrleitungssystem (8) aus Eisen, das umfasst:
ein Einwegventil (11), das mit der Vielzahl von Rohrleitungskomponenten mit einer Trinkwasserzufuhr (9) verbunden ist, wobei das Ventil so eingerichtet ist, dass es der Vielzahl von Rohrleitungskomponenten Wasser von der Trinkwasserquelle zuführt.

10. Rohrleitungssystem aus Eisen nach Anspruch 9, wobei eine der Vielzahl von Rohrleitungskomponenten ein Verbindungsstück (15) ist, und es einen Löschsprinkler (18) umfasst, der mit dem Verbindungsstück verbunden ist, so dass er über das Rohrleitungssystem von der Trinkwasserquelle mit Wasser versorgt wird.

## Revendications

1. Garniture lubrifiée (30, 130) de couplage de tuyaux ferreux, comprenant:
un élément élastomère, d'une pièce, généralement tubulaire, avec une première et une deuxième extrémité ouverte axiale (35, 36), où
l'élément est formé d'une paroi de circonférence (32) et d'au moins une paire de brides sur la circonférence (33, 34), chaque bride s'étendant de manière au moins généralement radiale vers l'intérieur sur une des première et deuxième extrémités ouvertes axiales (35, 36) de l'élément, la paroi de circonférence (32) et la paire de brides sur la circonférence (33, 34) formant au moins un canal de circonférence (38, 138) sur le côté interne de circonférence de l'élément;
**caractérisée en ce qu'**un lubrifiant sec (40) sous forme d'un revêtement en poudre est disposé sur au moins le côté intérieur de circonférence de la paire des brides (33, 34) de l'élément.

2. Garniture selon la revendication 1, dans laquelle le lubrifiant sec comprend une poudre d'amidon organique.

3. Garniture selon la revendication 1, dans laquelle le lubrifiant sec consiste essentiellement en une poudre d'amidon organique.

4. Garniture selon la revendication 1, dans laquelle le lubrifiant sec est choisi parmi le groupe consistant en l'amidon de maïs, l'amidon de riz, l'amidon de pomme de terre, le talc et l'hydroxyde de silicate de magnésium.

5. Garniture selon l'une quelconque des revendications 1 à 4, dans laquelle le lubrifiant sec revêt toutes les surfaces de circonférence de la garniture.

6. Couplage de tuyaux ferreux (16, 116, 316, 416), comprenant:
un collet ferreux (20, 120, 320, 420) ayant une paroi externe, s'étendant axialement, fendue axialement sur la circonférence (24), avec au moins une paire d'extrémités se rejoignant sur la circonférence (23) au niveau de la fente;
au moins une attache (29, 428, 429) fixant de manière amovible, l'une à l'autre, la au moins une paire des extrémités se rejoignant sur la circonférence du collet;
une garniture (30, 130) selon l'une quelconque des revendications 1 à 5, positionnée dans le collet avec la face de circonférence interne exposée dans le collet, et les brides (33, 34) sont disposées pour former un scellement avec un tuyau.

7. Couplage de tuyaux ferreux selon la revendication 6, dans lequel le collet ferreux (20) comprend une paire de brides sur la circonférence, s'étendant vers l'intérieur, de manière au moins généralement radiale (26, 27, 126, 127), chaque bride étant localisée sur une extrémité axiale séparée de la paroi de circonférence (24), la paire de brides et la paroi de circonférence (24) formant un canal de circonférence (28) sur un côté interne de circonférence du collet (20) et où la garniture (30) est positionnée dans le canal (28).

8. Système de tuyaux ferreux (10), comprenant:
une série de composants de tuyaux ferreux (11 - 17);
au moins un couplage de tuyaux ferreux (16, 116, 316, 416), selon la revendication 6 ou 7, joignant de manières mécanique et fluide, les extrémités d'une paire de composants de tuyau en un joint (19, 119, 219, 319), et
au moins une attache (29, 428, 429) fixant de manière amovible, l'une à l'autre, une paire des extrémités se rejoignant sur la circonférence du collet, de manière à comprimer la garniture et le collet sur les extrémités de la paire de composants de tuyaux.

9. Système de tuyaux ferreux de la revendication 8, comprenant:
une valve à une alternance (11) couplée à la série de composants de tuyaux vers une alimentation en eau potable (9), la valve étant agencée pour fournir l'eau depuis l'alimentation en eau potable vers la série de composants de tuyaux.

10. Système de tuyaux ferreux de la revendication 9, dans lequel la série de composants de tuyaux est un accessoires (15) et comprend une arroseuse pour le feu (18), couplée à l'accessoire, pour être fournie en eau par l'alimentation en eau potable par le système de tuyaux.
